# FASCICULE DE BREVET EUROPEEN

(11) **EP 1 284 080 B1**
(45) Date de publication et mention de la délivrance du brevet: **08.11.2006**
(21) Numéro de dépôt: 01938335.5
(22) Date de dépôt: 23.05.2001
(51) Int. Cl.: H04M 1/02, H04M 1/725

(54) **TELEPHONE MOBILE CONFIGURABLE**
KONFIGURIERBARES MOBILTELEFON
CONFIGURABLE MOBILE TELEPHONE

(30) Priorité: 25.05.2000 FR 0006723
(43) Date de publication de la demande: 19.02.2003
(73) Titulaire: SAGEM Communication, 75015 Paris (FR)
(72) Inventeur: HEURTAUX, Frédéric, F-13610 Le Puy Ste Reparade (FR)
(74) Mandataire: Schmit, Christian Norbert Marie
(86) Numéro de dépôt international: PCT/FR2001/001616
(87) Numéro de publication internationale: WO 2001/091425

(56) Documents cités:
- EP-A- 0 796 026
- WO-A-97/44912
- US-A- 5 023 936
- US-A- 5 146 615

## Description

L'invention a pour objet un téléphone mobile configurable. Le domaine d'application de l'invention est la téléphonie mobile, comprise autant en communication de paroles qu'en communication de données. Le but de l'invention est de permettre à un utilisateur de personnaliser et de perfectionner son téléphone mobile. Cet utilisateur peut ainsi utiliser des fonctions particulières suivant ses besoins. Un autre but de l'invention est de simplifier des opérations d'industrialisation. Le coût de revient initial du téléphone mobile pour l'utilisateur est alors diminué.

Lorsqu'un utilisateur achète un téléphone mobile, ce téléphone mobile possède déjà toutes les fonctions qu'il pourra effectuer. Il est difficile pour l'utilisateur de perfectionner son téléphone. Cependant certains téléphones mobiles ont des coques amovibles. Elles permettent non seulement de modifier l'allure extérieure du téléphone mais aussi d'adapter sur ces coques des fonctions manuelles, par exemple un détrompeur de batterie, voire un haut-parleur pour une écoute mains libres. Ainsi, il devient impossible de monter la batterie dans le sens inverse de celui prévu, ou d'adapter l'esthétique du téléphone pour lui permettre de recevoir élégamment des batteries plus volumineuses. Les modifications engendrées par ces coques amovibles sont généralement des modifications mécaniques.

Quand les modifications sont fonctionnelles, elles doivent correspondre à une modification d'un système d'exploitation du téléphone mobile. Une telle modification nécessite donc de l'utilisateur en outre, une intervention sur ce système d'exploitation pour en modifier les paramètres. En fabrication, les étapes de fabrication peuvent nécessiter une étape de modification préalable des paramètres. Il en résulte des séries différenciées de fabrication. Ces séries différenciées induisent des difficultés de gestion de la fabrication.

L'invention concerne des téléphones mobiles configurables. Pour résoudre les problèmes ci-dessus, dans l'invention on utilise des circuits du téléphone mobile pour adapter les paramètres du système d'exploitation au type d'utilisation impliqué par la coque. Il en résulte que la modification du système d'exploitation est automatique, ou au moins repoussée ultérieurement, voire déplacée à une opération indépendante dans la différenciation de fabrication. Dans l'invention, la coque du téléphone est munie d'un élément caractéristique. Les circuits du téléphone, permettant d'adapter les paramètres du système d'exploitation au type d'utilisation impliqué par la coque, peuvent être de différentes natures.

On connaît par les documents WO-A-97 44912 et EP-A-0 796 026, des détecteurs optiques supplémentaires renfermés dans le boîtier du téléphone mobile et dédiés exclusivement à fournir une information de configuration. La présente invention vise à remédier à cet inconvénient de détecteur supplémentaire avec une solution alternative plus flexible du point de vue fonctionnel.

La solution de l'invention envisage l'ajout d'un détecteur optique. Ainsi on ajouter un capteur CMOS dans lequel il y des pixels spéciaux hors d'une zone active ordinaire. Dans ce capteur, on intégrer une logique de contrôle et de calcul. Dans ce cas, la surface entière du capteur est dédiée à la capture d'une image utile. Quelques pixels situés autour de la logique de contrôle se comportent comme des détecteurs d'environnement.

Le téléphone est à cet effet équipé d'une caméra. Dans ce cas, l'élément caractéristique est visible par l'objectif de la caméra. Et la caméra est capable d'interpréter cet élément caractéristique, porteur d'une information. Le fonctionnement du téléphone mobile est affecté par une combinaison d'une optique particulière et une fonction de reconnaissance d'images.

Cette information peut être de différentes natures : elle peut signifier par exemple l'identité de l'utilisateur du téléphone. Ainsi, une famille peut disposer d'un téléphone mobile qui appartient à plusieurs de ses membres, chaque membre ayant un compte séparé. La coque est de préférence amovible dans ce cas. La coque peut aussi être munie d'une fonction d'amplification du signal acoustique, d'une fonction d'une lampe de poche, d'une fonction radiophonique. Une fonction de saisie de numéro de téléphone dans un répertoire du téléphone par une reconnaissance d'image vidéo d'écriture scannée ou une fonction de saisie de messages SMS (d'un autre téléphone) par reconnaissance vidéo peut aussi être ajoutée grâce à la coque. L'élément caractéristique permet l'identification de la nouvelle fonction. L'utilisation de telle coque permet une grande diversité des fonctions qui sont rajoutées.

L'invention concerne donc un téléphone mobile comportant une coque munie d'un élément caractéristique portant une information, des circuits optiques de détection pour détecter l'information portée par l'élément caractéristique, et des moyens pour se configurer en correspondance de cette détection, caractérisé en ce qu'il comporte une caméra, en ce que l'élément caractéristique est situé sur une surface périphérique d'un orifice d'observation de la caméra et porte une information visible par la caméra, et en ce qu'il comporte des moyens pour interpréter une image de l'élément caractéristique produite par la caméra.

L'invention sera mieux comprise à la lecture de la description qui suit et à l'examen des figures, qui l'accompagnent. Celles-ci ne sont présentées qu'à titre indicatif et nullement limitatif de l'invention. Les figures montrent :
- Figure 1 : un téléphone mobile conforme à l'invention ;
- Figure 2 : une représentation schématique avec des pixels d'une image prise par un capteur d'une caméra du téléphone mobile conforme à l'invention ;
- Figure 3 : une représentation schématique du contenu du téléphone mobile et du contenu d'une coque.

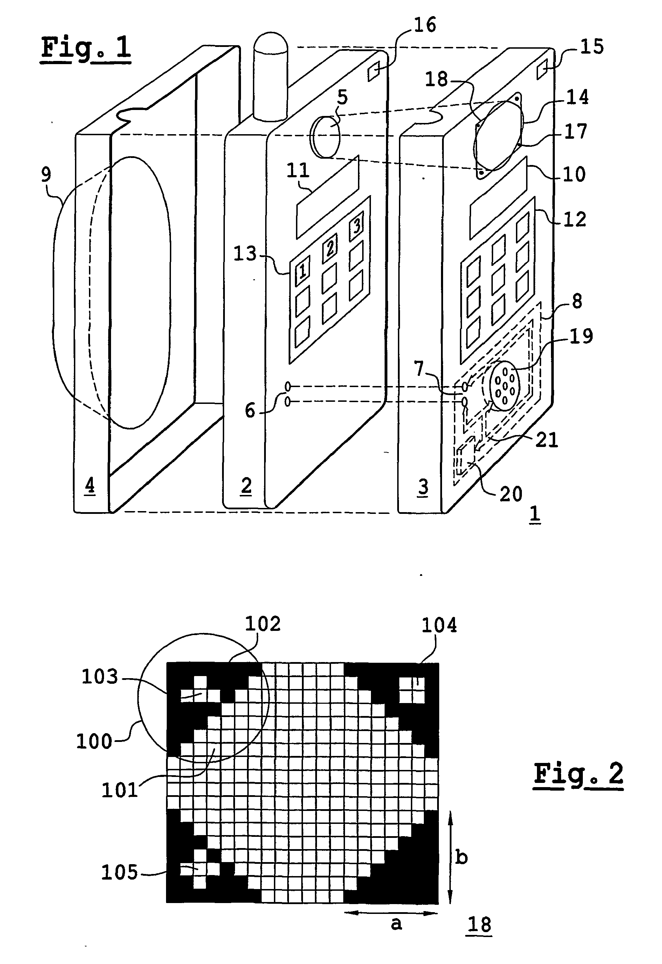

La figure 1 montre un téléphone mobile 1 conforme à l'invention. Dans la description qui suit, l'exemple de réalisation de l'invention choisi est celui d'un téléphone mobile équipé d'une caméra.

Ce téléphone comporte essentiellement un circuit 2 électronique et acoustique maintenu dans une coque. La coque peut être réalisée en deux parties : une coque avant 3 et une coque arrière 4. On pourrait tout aussi bien avoir une coque haute et une coque basse. La coque du téléphone 1 peut être amovible.

En plus des circuits classiques d'un téléphone mobile, le circuit 2 comporte une caméra 5 et, dans un exemple, un connecteur 6. Ce connecteur 6 est destiné à venir au contact d'un connecteur complémentaire 7 maintenu dans la coque avant 3. La coque avant 3 peut à cet effet contenir un circuit fonctionnel 8 relié au connecteur 7. Dans cet exemple, le circuit 8 pourrait comporter un haut-parleur. La coque arrière 4 comporte par exemple un renfoncement 9 pour contenir une batterie.

La coque avant 3 s'emboîte sur la face avant du circuit 2. La coque avant 3 comporte un orifice 10, ou une fenêtre transparente, situé en regard d'un écran 11 porté par le circuit 2. La coque avant 3 comporte encore un ensemble 12 d'orifices pour laisser passer des touches d'un clavier de commande 13 porté par le circuit 2. Un orifice 14 est aussi prévu dans la coque avant 3 pour dégager l'objectif de la caméra 5 tout en masquant en partie l'objectif. La coque avant 3 comporte également un orifice 15 pour une diode réseau 16. La diode réseau 16 portée par le circuit 2 éclaire l'entrée d'un guide de lumière débouchant en face avant du téléphone dans l'orifice 15.

Selon l'invention, un élément caractéristique 17 est situé sur la surface périphérique interne de l'orifice 14 d'observation de la caméra 5. L'élément caractéristique 17, portant une information visible par la caméra 5 peut être de différentes natures.

Une première nature pour l'élément caractéristique 17 peut être une pastille de couleur. Dans ce cas, la couleur de la pastille peut déterminer la nature du circuit fonctionnel 8 qui va être rajouté au circuit 2 grâce à la coque avant 3. Ainsi, à une couleur peut être associée une fonction. Pour éclairer la face périphérique interne de l'orifice 15, le guide de lumière débouchant par l'orifice 15 peut être utilisé.

Une deuxième possibilité pour différencier l'élément 17 peut être d'y réaliser des trous avec des formes géométriques particulières. Ainsi suivant que le trou sera par exemple un triangle, un carré ou une étoile, la fonction apportée par la coque avant 3 sera différente.

II serait également envisageable d'utiliser des pastilles de couleur ayant des formes particulières. Ainsi la diversité des fonctions possibles serait encore plus importante.

En variante, la fenêtre 14 disposée dans la coque avant 3 en regard de la caméra 5 est sans masquage périphérique. Mais on peut rapporter, notamment par des étiquettes d'obturation, adhésives ou non, définitivement ou provisoirement, des motifs périphériques jouant le rôle de l'élément 17, et possédant avec un milieu transparent (ou opaque). Ces étiquettes peuvent être posées provisoirement, le temps de valider une option de fonctionnement du circuit 2. En fabrication, on peut ainsi fabriquer à part des jeux d'étiquettes et apposer l'une d'elles sur la fenêtre de la caméra, en dernière étape de fabrication, à la demande, pour personnaliser simplement les téléphones mobiles. Ces étiquettes peuvent aussi être données, ou vendues, aux utilisateurs.

Selon une autre réalisation, l'orifice 14 dégage entièrement l'objectif de la caméra 5. Dans ce cas, une glissière ou un obturateur de protection de l'objectif comporte un élément caractéristique 17. L'élément peut être, par exemple, un motif ajouré particulier. Avec une telle réalisation, les coins du capteur de l'objectif n'ont plus besoin de voir la coque. Ainsi le capteur peut être utilisé à son maximum. L'avantage d'une telle réalisation est non seulement la maximisation de la taille de l'image capturée mais aussi le non-gaspillage de pixels.

Dans un exemple, un circuit fonctionnel 8 définissant la fonction impliquée par l'élément caractéristique 17 est fixé sur la face interne de la coque avant 3. Ce circuit 8 est relié au circuit principal du circuit 2 du téléphone mobile grâce aux connecteurs 6.

La caméra 5 peut être une caméra couleur ou une caméra noir et blanc. Mais si on utilise des pastilles de couleur, il est préférable d'utiliser une caméra couleur.

Pour la caméra 5, différents types de capteurs d'image existent. Il est possible d'utiliser des capteurs CCD ou des capteurs CMOS. La résolution des capteurs CMOS est moindre que celle des capteurs CCD mais ils sont moins coûteux. Ces capteurs sont constitués , par exemple, de N x M pixels carrés. Chaque pixel est généralement constitué de trois éléments rectangulaires verticaux sensibles à l'intensité lumineuse. Les trois éléments détecteurs sont généralement sensibles au rouge, au vert et au bleu. Dans le cas où un capteur CIF 352x288 de type CMOS est utilisé, des niveaux d'illumination détectés par chacun de ces éléments détecteurs sont codés sur 8 bits.

Dans une réalisation préférée, des pastilles de couleur ou tout autre élément caractéristique 17 de la coque sont placés dans un coin ou aux quatre coins d'une image 18 (figure 2) vue par le capteur de la caméra 5. Pour déterminer la nature de l'élément caractéristique 17, une résolution sur 128 colonnes et 100 lignes avec un capteur CIF est tout à fait suffisante.

Un problème de luminosité apparaît notamment dans le cas où ce dispositif est utilisé dans l'obscurité. Pour qu'un fonctionnement correct soit possible, une petite source lumineuse est donc nécessaire. Cette source lumineuse peut être fournie, par exemple, soit par un éclairage de l'écran 11 lui-même, soit par la diode réseau 16. Cette source lumineuse permet de différencier l'orifice 14 en contact avec la lumière de l'élément caractéristique 17 sur l'image capturée par la caméra 5. Eventuellement, l'élément caractéristique 17 comporte des trous laissant passer la lumière du jour.

Pour éviter de perturber régulièrement l'image reçue, le clignotement de la diode réseau 16 pourrait être arrêté ou la diode 16 pourrait émettre des flash entre les prises d'images. Une autre solution pour éviter ce problème, serait d'appliquer filtre spécifique à la longueur d'onde émise en compressant l'influence sur l'image.

On obtient finalement une image de l'élément caractéristique 17 de la coque avant 3. Une interprétation de cette image est alors nécessaire. Cette interprétation permettra de modifier le fonctionnement du téléphone mobile 1.

Dans l'exemple schématique, le circuit 8 comporte un haut-parleur 19 et un circuit 20 permettant l'amplification d'un signal acoustique. Le haut-parleur 19 et le circuit 20 sont relié par un bus 21.

Dans le cas où l'élément caractéristique 17 est de forme géométrique particulière, l'image couleur de l'élément caractéristique peut être transformée en une image noir et blanc. Chaque pixel est caractérisé par un signal de luminance. On quantifie le signal de luminance et après avoir fixé un seuil de luminance S, il est possible de déterminer si le pixel couleur devient un pixel noir ou un pixel blanc. Si le signal de luminance d'un pixel a une valeur inférieure au seuil S alors ce pixel devient un pixel noir et dans le cas contraire ce pixel devient un pixel blanc.

Pour déterminer la nature de la fonction définie par l'élément caractéristique 17, des images des coins de l'image 18 sont de préférence mémorisées dans une mémoire comportant autant de cellules que le produit du nombre de colonnes (128 préféré) par le nombre de lignes (100 préféré). Toutefois, la taille de cette mémoire peut être réduite si on ne s'intéresse de ce point de vue qu'à certaines parties de l'image, par exemple seulement les coins.

La figure 2 montre une représentation schématique, non à l'échelle, d'une image 18 avec ses pixels.

Dans une image 100 d'un coin de l'image 18, des pixels noirs et des pixels blancs apparaissent. L'image 100 comporte deux zones 101 et 102 sensiblement triangulaires contiguës par un coté qui coupe un coin de l'image 18. La zone 101 regroupe la majorité des pixels blancs et la zone 102 regroupe la majorité des pixels noirs. La zone 101 correspond à une partie transparente de la fenêtre 14 qui est disposée devant le champ de la caméra 5. La zone 102, la plus dans le coin, comporte la partie masquée par l'élément caractéristique 17. Seule la zone 102 est traitée. Une distribution 103 de pixels blancs est présente dans la zone 102. La distribution 103 est ici un petit triangle mais il est possible d'avoir une distribution 104 formant un carré, ou une distribution 105 formant une étoile.

L'image 18 comporte quatre coins. II est donc envisageable par exemple de disposer dans chaque coin la même pastille ou la même forme géométrique pour disposer ainsi d'un système de secours. Si une pastille est abîmée, une autre pastille est utilisable. Mais il est aussi envisageable de mettre des pastilles ou des trous différents dans chaque coin. Dans ce cas il serait possible de donner des précisions sur la nature de la fonction qui doit être ajoutée dans le téléphone mobile 1, par exemple la gestion d'une batterie de forte capacité.

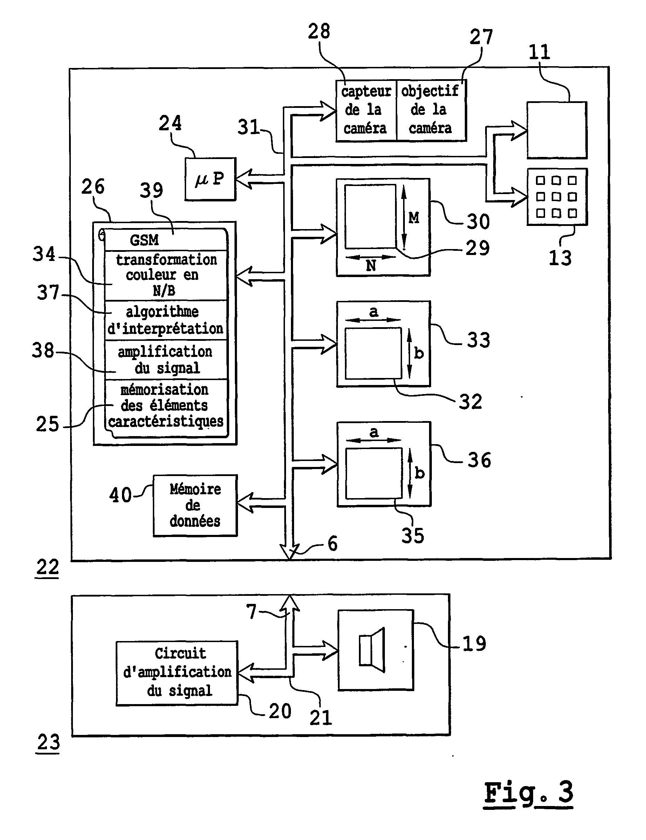

La figure 3 montre un diagramme fonctionnel 22 du circuit 2 d'un téléphone mobile classique et le diagramme fonctionnel 23 ajouté par la coque avant 3. Le diagramme 23 peut cependant correspondre à une fonction interne au circuit 2, et qui serait validée par la détection par la caméra 5 de l'élément caractéristique 17.

Les éléments caractéristiques de la coque avant 3 jouent en quelque sorte un rôle d'une fonction de débridage. Un microprocesseur 24 du diagramme 22 reconnaît l'élément caractéristique 17 grâce à un programme 25 contenu dans une mémoire programme 26. Le programme 25 a été mémorisé à l'avance pour reconnaître les différents trous ou pastilles de couleurs envisageables, afin de différencier les différentes fabrications ou utilisations. Lorsque l'élément caractéristique 17 est détecté par la caméra puis interprété, son interprétation débloque une fonction du téléphone mobile 1. La coque avant 3 peut n'apporter que le dispositif matériel. Ainsi toute la partie logicielle peut très bien être déjà intégrée au circuit 2 du téléphone mobile 1.

Dans le diagramme 23 de l'exemple, le circuit 20 d'amplification du signal est relié par le bus 21 au haut-parleur 19. Le bus 21 est relié au connecteur 7.

Lorsque la coque avant 3 a été rajoutée sur le téléphone mobile 1. La caméra 5 détecte, grâce à un objectif 27 et à un capteur 28, les éléments caractéristiques 17. L'image 18 capturée par le capteur 28 de la caméra 5 est mémorisée dans un fichier 29 d'une mémoire d'image 30 par l'intermédiaire d'un bus 31 relié au microprocesseur 24.

Une image couleur d'un coin est mémorisée dans un fichier 32 d'une mémoire d'image 33 reliée au bus 31. L'image contenue dans le fichier 32 peut être transformée en une image 100, figure 2, noir et blanc grâce à un programme 34 contenu dans la mémoire programme 26. Pour gagner du temps de calcul et de l'espace mémoire, on choisit ici d'effectuer la transformation couleur en noir et blanc sur l'image du coin et non sur l'image entière. L'image 100 peut être mémorisée dans un fichier 35 d'une mémoire image 36 grâce au bus 31, ou en lieu et place du fichier 32.

Un programme 37, contenant un algorithme d'interprétation permettant de détecter et d'interpréter le nombre et la distribution de pixels noirs de chaque image 100 est mémorisé dans la mémoire programme 26

L'algorithme 37 a pour objet de comparer une image 32, ou 35, mesurée à une ou plusieurs images attendues, mémorisées dans une mémoire de données 40, ou mémorisées, implicitement ou explicitement, dans le programme 37 lui-même. Si cette comparaison est positive, le programme déclenche un débridage de la fonction désirée. Par exemple, il provoque une amplification du signal (ici réalisée sous forme logicielle dans un programme 38 de la mémoire programme 26).

Le débridage peut donner lieu à un choix supplémentaire dans un menu utilisateur contenu dans un programme général 39 de téléphonie contenu dans la mémoire programme 26. Les choix effectués par l'utilisateur grâce à l'écran 11 et au clavier 13 sont mémorisés dans la mémoire de données 40 par l'intermédiaire du bus 31.

Le débridage peut concerner un débridage du microprocesseur 24 qui dirige alors les opérations à suivre pour effectuer une amplification du signal. Dans la plupart des cas, le programme 39 sera paramétré par les résultats du traitement de l'algorithme 37. A cet effet, on peut prévoir soit que l'algorithme 37 soit lancé au début du programme 39, à chaque mise en service du téléphone mobile, soit que le programme 39 soit relancé (reboot) après exécution de l'algorithme 37.

Dans le cas d'une comparaison positive, une autre possibilité est envisageable: le bridage d'une fonction comme, par exemple, la désactivation de la fonction vidéo.

Le principe du bridage peut se différencier du principe du débridage, expliqué ci-dessus, par l'élimination d'un choix dans le menu utilisateur contenu dans le programme 39.

## Revendications

1. Téléphone mobile (1) comportant une coque (3 - 4) munie d'un élément caractéristique (17) portant une information, des circuits optiques de détection pour détecter l'information portée par l'élément caractéristique, et des moyens (37) pour se configurer en correspondance de cette détection, **caractérisé en ce que** les circuits optiques comportent une caméra, **en ce que** l'élément caractéristique est situé sur une surface périphérique d'un orifice (14) d'observation de la caméra et porte une information visible par la caméra, et **en ce qu'**il comporte des moyens pour interpréter une image de l'élément caractéristique produite par la caméra.

2. Téléphone selon la revendication 1, **caractérisé en ce qu'**il comporte des moyens (39) pour modifier son fonctionnement en fonction de l'information détectée par les circuits du téléphone mobile.

3. Téléphone selon l'une des revendications 1 à 2, **caractérisé en ce qu'**il comporte des moyens d'exécution d'un premier sous-programme (34) dans une mémoire programme (26) pour transformer un signal représentatif d'une image couleur en un signal représentatif d'une image en noir et blanc.

4. Téléphone selon l'une des revendications 1 à 3, **caractérisé en ce qu'**il comporte des moyens d'exécution d'un deuxième sous-programme (37) dans une mémoire programme (26), ce deuxième sous-programme contenant un algorithme pour permettre de détecter un nombre et ou une distribution de pixels noirs sur une surface de la coque.

5. Téléphone selon l'une des revendications 1 à 4, **caractérisé en ce que** l'élément caractéristique est situé dans un coin d'une image détectée par les circuits de téléphone.

6. Téléphone selon l'une des revendications 1 à 5, **caractérisé en ce** la coque est munie d'un circuit fonctionnel (8) réalisant une fonction particulière, l'élément caractéristique étant dépendant de cette fonction.

7. Téléphone selon l'une des revendications 1 à 6, **caractérisé en ce qu'**il comporte une étiquette à apposer sur une fenêtre de visée de la caméra.

8. Téléphone selon l'une des revendications 1 à 6, **caractérisé en ce qu'**il comporte un jeu d'étiquettes à apposer sur une fenêtre de visée de la caméra.

9. Téléphone selon l'une des revendications 1 à 8, **caractérisé en ce qu'**il comporte une glissière ou un obturateur de protection de la caméra portant l'élément caractéristique.

10. Téléphone selon l'une des revendications 1 à 11, **caractérisé en ce qu'**il comporte des moyens d'éclairement de la coque par l'intérieur qui ne perturbent pas le fonctionnement de la caméra.

11. Téléphone mobile selon l'une revendications 1 à 12, **caractérisé en ce que** la coque est amovible.

## Claims

1. A mobile telephone (1) comprising a shell (3 - 4) equipped with a characteristic element (17) carrying information, optical detection circuits for detecting information carried by the characteristic element, and means (37) for being configured in correspondence with this detection, **characterized in that** the optical circuits comprise a camera, **in that** the characteristic element is situated on a peripheral surface of a camera observation opening (14) and carries information visible by the camera, and **in that** the telephone comprises means for interpreting an image of the characteristic element produced by the camera.

2. The telephone according to claim 1, **characterized in that** the telephone comprises means (39) for modifying its operation according to the information detected by the mobile telephone circuits.

3. The telephone according to one of claims 1 to 2, **characterized in that** the telephone comprises means for executing a first subprogram (34) in a program memory (26) to transform a signal representative of a color image into a signal representative of a black and white image.

4. The telephone according to one of claims 1 to 3, **characterized in that** the telephone comprises means for executing a second subprogram (37) in a program memory (26), this second subprogram containing an algorithm to allow a number and/or a distribution of black pixels on a surface of the shell to be detected.

5. The telephone according to one of claims 1 to 4, **characterized in that** the characteristic element is situated in a corner of an image detected by the telephone circuits.

6. The telephone according to one of claims 1 to 5, **characterized in that** the shell is equipped with a functional circuit (8) performing a particular function, the characteristic element being dependent on this function.

7. The telephone according to one of claims 1 to 6, **characterized in that** the telephone comprises a label to be affixed on an aiming window of the camera.

8. The telephone according to one of claims 1 to 6, **characterized in that** the telephone comprises a set of labels to be affixed on an aiming window of the camera.

9. The telephone according to one of claims 1 to 8, **characterized in that** the telephone comprises a protective slide or shutter for the camera carrying the characteristic element.

10. The telephone according to one of claims 1 to 11, **characterized in that** the telephone comprises means for illuminating the shell from the inside that do not disturb the operation of the camera.

11. The mobile telephone according to one of claims 1 to 12, **characterized in that** the shell is removable.

## Patentansprüche

1. Mobiltelefon (1), das eine Schale (3 - 4) versehen mit einem charakteristischem Element (17), das eine Information trägt, optische Erfassungsschaltkreise zum Erfassen der von dem charakteristischem Element getragenen Information aufweist sowie Mittel (37), um sich entsprechend dieser Erfassung zu konfigurieren, **dadurch gekennzeichnet, dass** die optischen Schaltkreise eine Kamera enthalten, **dadurch**, dass sich das charakteristische Element auf einer peripheren Fläche einer Beobachtungsöffnung (14) der Kamera befindet und eine Information trägt, die von der Kamera sichtbar ist, und dass es Mittel zum Auslegen eines Bilds des charakteristischen Elements, das von der Kamera erzeugt wird, umfasst.

2. Telefon, nach Anspruch 1, **dadurch gekennzeichnet, dass** es Mittel (39) zum Ändern seines Funktionierens in Abhängigkeit von der von den Schaltkreisen des Mobiltelefons erfassten Information aufweist.

3. Mobiltelefon nach einem der Ansprüche 1 bis 2, **dadurch gekennzeichnet, dass** es Mittel zum Ausführen eines ersten Unterprogramms (34) in einem Programmspeicher (26) aufweist, um ein Signal, das für ein Farbbild repräsentativ ist, in ein Signal umzuwandeln, das für ein Schwarz- und Weißbild repräsentativ ist.

4. Telefon nach einem der Ansprüche 1 bis 3, **dadurch gekennzeichnet, dass** es Mittel zum Ausführen eines zweiten Unterprogramms (37) in einem Programmspeicher (26) aufweist, wobei dieses zweite Unterprogramm einen Algorithmus aufweist, um es zu erlauben, eine Anzahl und/oder eine Verteilung schwarzer Bildpunkte auf einer Oberfläche der Schale zu erfassen.

5. Telefon nach einem der Ansprüche 1 bis 4, **dadurch gekennzeichnet, dass** sich das charakteristische Element in einer Ecke eines Bilds befindet, das von den Telfonschaltkreisen erfasst wird.

6. Telefon nach einem der Ansprüche 1 bis 5, **dadurch gekennzeichnet, dass** die Schale mit einem funktionalen Schaltkreis (8) versehen ist, der eine besondere Funktion ausführt, wobei das charakteristische Element von dieser Funktion abhängt.

7. Telefon nach einem der Ansprüche 1 bis 6, **dadurch gekennzeichnet, dass** es ein Etikett aufweist, das auf einem Peilfenster der Kamera anzubringen ist.

8. Telefon nach einem der Ansprüche 1 bis 6, **dadurch gekennzeichnet, dass** es einen Satz von Etiketten aufweist, die auf einem Peilfenster der Kamera anzubringen sind.

9. Telefon nach einem der Ansprüche 1 bis 8, **dadurch gekennzeichnet, dass** es eine Gleitschiene oder einen Schutzverschluss der Kamera, die das charakteristische Element trägt, aufweist.

10. Telefon nach einem der Ansprüche 1 bis 11, **dadurch gekennzeichnet, dass** es Beleuchtungsmittel der Schale von innen her aufweist, die den Betrieb der Kamera nicht stören.

11. Mobiltelefon nach einem der Ansprüche 1 bis 12, **dadurch gekennzeichnet, dass** die Schale abnehmbar ist.
